# EUROPEAN PATENT SPECIFICATION

(11) **EP 2 433 777 B1**
(45) Date of publication and mention of the grant of the patent: **24.04.2013**
(21) Application number: 11182808.3
(22) Date of filing: 26.09.2011
(51) Int. Cl.: B29C 51/30, B29C 33/30

(54) **Assembly for a thermoforming mould, a thermoforming device, the use of the device and method of thermoforming**
Baugruppe für Form zum Warmumformen, eine Vorrichtung zum Warmumformen, Verwendung der Vorrichtung und Verfahren zum Warmumformen
Ensemble pour un moule de thermoformage, un appareil pour le thermoformage, utilisation de l'appareil, et procédé de thermoformage

(30) Priority: 28.09.2010 NL 1038268
(43) Date of publication of application: 28.03.2012
(73) Proprietor: Bosch Sprang Beheer B.V., 5161 DA Sprang-Capelle (NL)
(72) Inventor: Haex, Martijn, 5141 JG Waalwijk (NL); Bosch, Antoni, 5161 EE Sprang-Capelle (NL)
(74) Representative: Jacobs, Bart

(56) References cited:
- EP-A2- 0 359 242
- JP-U- 56 135 826
- US-A- 6 120 279

## Description

The present invention relates to an assembly for forming a thermoforming mould. The present invention also relates to a thermoforming device with a mould formed with this assembly, and the use thereof. The present invention further relates to a method for thermoforming products from a plastic layer.

Thermoforming is a known technique for manufacturing products from a plastic layer, usually in the form of a sheet or foil. This technique makes use of the fact that with sufficient heating the form of thermoplastic materials such as polypropylene (PP), polystyrene (PS) or polyethylene (PET) can be changed.

A typical thermoforming device comprises two moulds, an upper and lower mould. The heated plastic material is introduced here between the two moulds. After the moulds have been moved toward each other the plastic material is carried by a pre-stretcher into mould cavities of the mould. These mould cavities are defined by the walls of a forming sleeve and are usually present in the lower mould. A forming base is also incorporated in the forming sleeve to form the base of the product. An increased pressure is applied to press the plastic against the wall and the base of the mould cavity. Because the wall and the base of the cavity are kept at relatively low temperature, the plastic will take on a fixed form. The combination of upper and lower mould usually comprises a plurality of mould cavities, and so a plurality of forming sleeves as well. A plurality of products can hereby be formed from one sheet or foil.

A regular occurrence during production is that the forming sleeves must be taken out of the mould or exchanged. It may thus be necessary that products having a different product geometry must be manufactured, that the forming sleeves must be cleaned or that the relevant parts are damaged.

Disassembly and assembly of these parts is preferably carried out as quickly and easily as possible. Quick exchange is important in limiting to a minimum the downtime of an expensive production machine.

In the known thermoforming device the mould comprises a plurality of forming sleeves, each provided with a slot or groove along a periphery of the forming sleeve. The sleeves can be placed in cavities of a mould body. The mould body is provided with a guide channel which passes at least partially through the cavities. Received in the guide channel is a movable pin which is movable between a locking position, in which the pin protrudes into the slot or groove and therefore locks the forming sleeve in the cavity, and a release position in which the forming sleeve is released by the pin and can be taken out of the cavity. In the known mould the pin must be wholly removed from the mould body before exchanging of the forming sleeves. The release position therefore corresponds with a position of the pin outside the mould body.

The pin consists of a single locking part of substantially uniform cross-section. A plurality of pins are further used to each lock a row of multiple forming sleeves. A mould of medium size comprises about six individual pins. The pins are each individually fixed with bolts.

For the purpose of exchanging the forming sleeves the pin blocking must be disassembled and the pins removed manually from the mould. The forming sleeves can then be removed from the mould body. When the forming sleeves have been exchanged, the pins must be mounted again and secured with bolts so that the pins cannot release from the mould during operation.

A mould as described above has already been in use for several decades for the thermoforming of products.

The known mould does however have a number of drawbacks. A first drawback is that exchanging folding sleeves is time-consuming and labour-intensive. The large number of this type of components in the mould, generally more than ten, combined with the time required per component to exchange and/or modify the component, makes the use of the above stated moulds in a production line increasingly less effective.

A further drawback is that specific auxiliary tools must be used for the above stated operations. A location is also needed for setting down the pins and bolts inside the thermoforming device.

Thermoforming devices are generally guarded machines. The moving parts of the device are separated here from the vicinity by means of a guard. Before the operator of the device can perform manual operations on the machine, he must stop the machine and then gain access to for instance the mould.

In the known thermoforming device the exchanging of the forming sleeves comprises the following steps. The device is first stopped. The guard is then interrupted, for instance by opening a door, so that the operator can remove the pins. Tools are needed for this purpose. The operator must then leave the device and restore the guarding. This is necessary because the lower mould has to be tilted in order to exchange the forming sleeves. The distance between lower and upper mould does not usually allow exchanging of the forming sleeves when a mould is not tilted. After tilting, the operator enters in order to exchange the forming sleeves. He must then exit again in order to tilt back the mould. As final step, the operator must enter again to place the pins. It will be apparent that the above operations are labour-intensive and time-consuming.

US 6 120 279 A proposes the use of guide channels and pins having locking parts and release parts. JP 56 135826 U proposes the coupling of several locking/release parts together. However, the latter document only proposes coupling of locking/release parts for one single mould body.

An assembly for forming a thermoforming mould according to the preamble of claim 1 is known from EP 0 359 242 A2.

It is an object of the present invention to provide an assembly for forming a thermoforming mould wherein the above stated drawbacks do not occur, or hardly so.

This object is achieved with the assembly according to claim 1.

In the known mould the pin must be wholly removed from the mould body. This results in separate components in the device which may be later forgotten or may be damaged. A determined space is further necessary in order to remove the pin in its entirety from the mould body. The mould according to the present invention does not have these problems. It is not necessary to remove the pin in order to exchange forming sleeves. It is only necessary to move the pin such that it is not the locking part but the release part which comes to lie in the vicinity of the forming sleeve. Because this part, in contrast to the locking part, does not engage or hardly engages the forming sleeve, and particularly the engaging element, the forming sleeve can be removed.

In an embodiment of the assembly according to the invention the cavity of the mould body is adapted to receive the forming sleeve in a first direction, and the guide channel extends substantially perpendicularly of the first direction. The mould body usually comprises one or more plate parts, wherein the guide channel extends parallel to and optionally in these plate parts. The cavities are arranged perpendicularly in these plate parts.

In an embodiment of the assembly according to the invention the guide channel passes through the cavity over a predetermined length which is smaller than or substantially equal to a length of the locking part and release part of the pin in the direction of movement of the pin. The pin will usually cross the cavity only on one side. This is possible when the locking part of the pin engages a slot or groove arranged around the forming sleeve. The length of the locking part or release part depends on the desired length over which the locking part or release part must or must not engage the slot or groove. It will however be apparent that the required displacement of the pin is reduced considerably compared to the complete removal of the pin from the mould body in the known mould. The guide is usually adapted to slide the pin in the mould body.

According to the invention, it is possible to lock and release a plurality of forming sleeves with a single pin using the same movement of the pin as is the case for a single forming sleeve. Compared to the known mould, it is easier with this embodiment to make larger moulds in the direction of movement of the pin.

In a further embodiment of the assembly according to the invention the assembly comprises a plurality of guide channels and pins, each associated with another plurality of cavities and forming sleeves. The assembly further comprises a coupling for coupling the individual pins for the purpose of the simultaneous locking and release of the pluralities of forming sleeves. With this embodiment it is thus possible to realize a plurality of forming sleeves in a direction perpendicularly of the direction of movement of the pin in the mould without each pin having to be moved separately here in order to switch between locking position and releasing position.

In a further embodiment of the assembly according to the invention the coupling between the individual pins comprises a plate part connected to an end of each of the individual pins. Moving the plate part is sufficient to move all pins.

In an embodiment of the assembly according to the invention the assembly comprises a remotely controllable actuator for driving the pin for movement between the locking position and the releasing position. It hereby becomes possible for the operator to switch between locking position and releasing position without interrupting the guarding of the device. In other words, the operator need not be in the vicinity of the mould. In this embodiment no or hardly any tools are required because the actuator fixes the pins in the releasing position or locking position by means of driving or actuating the coupling. Exchanging the forming sleeves can therefore be carried out by less skilled staff, whereby exchanging can for instance also take place during the night shift. This will of course improve the productivity of the thermoforming device.

In an embodiment of the assembly according to the invention the actuator is adapted to generate a mutual force between the mould body and the coupling. No external frame is hereby necessary for the actuator to push against.

In a further embodiment of the assembly according to the invention the actuator is at least partially received in the mould body. A flat finish can be realized by arranging the actuator in the mould body.

In a further embodiment of the assembly according to the invention the mould body comprises a chamber in which is received a movable piston which is connected to the coupling by means of a piston rod, and a seal for sealing the chamber, wherein the chamber is provided with at least one opening for building up a pressure difference over the piston by means of feeding or discharging a medium for the purpose of moving the piston, the piston rod, the coupling and the pins. In this embodiment a single opening can suffice for feed and discharge of a medium for the purpose of realizing a pressure change on one side of the piston. A resilient element such as a spring can be received on the other side so that the piston can move up and downward. It is however recommended to embody the chamber such that an opening is arranged for feed and discharge of medium on both sides of the piston.

In a further embodiment of the assembly according to the invention the medium is air or gas, and the chamber, the piston, the piston rod, the at least one opening and the seal form a pneumatic cylinder.

In another further embodiment of the assembly according to the invention the medium is a liquid such as oil and the chamber, the piston, the piston rod, the at least one opening and the seal form a hydraulic cylinder.

In another embodiment of the assembly according to the invention the coupling is moved relative to the mould body by an electric motor which can optionally be at least partially received in the mould body.

In an embodiment of the assembly according to the invention the engaging element comprises a recess. Within the context of the present invention the engaging element can be an integral part of the forming sleeve. In the case of a recess, the engaging element can be a part of the forming sleeve in which a recess is arranged or formed. In addition to a recess it is also possible to use a protrusion. The use of a protrusion may however impose requirements in respect of the fit of the forming sleeve in the cavity. Such an embodiment is nevertheless not precluded.

In a further embodiment of the assembly according to the invention the recess of the engaging element comprises a groove or slot along at least part of the periphery of the forming sleeve. Such a groove or slot can be formed by indenting the forming sleeve.

In a further embodiment of the assembly according to the invention the locking part of the pin extends, at least in the locking position, from a wall of the cavity into the recess of the engaging element. The release part of the pin also comprises a recess, whereby at least in the releasing position the release part does not extend from the wall, or hardly so. In the locking position the minimum inner dimension of the cavity is thus also determined by the locking part, while in the releasing position the minimum inner dimension is determined wholly or almost wholly by the wall of the cavity.

In a further embodiment of the assembly according to the invention the release part of the pin lies substantially in register with the wall of the cavity, at least in the releasing position. A smooth inner wall of the cavity is hereby obtained in the releasing position.

The present invention also provides a thermoforming device comprising a mould formed with the above described assembly for forming a thermoforming mould.

In an embodiment of the thermoforming device according to the invention the device comprises a control for remote control of the actuator for the purpose of locking or releasing the forming sleeves. As described above, this obviates the need to interrupt the guarding of the device when switching between the locking position and releasing position.

According to a further aspect, the present invention relates to the use of a thermoforming device as described above for thermoforming products.

According to a further aspect, the present invention provides a method for thermoforming products from a plastic layer, comprising the steps of providing a thermoforming device as described above, bringing or holding the thermoforming device in the releasing position, placing forming sleeves corresponding to the products for thermoforming, moving the thermoforming device to the locking position and thermoforming the products from the plastic layer.

The invention will be discussed in more detail hereinbelow with reference to the figures, in which:
Figures 1A and 1B show an embodiment of a mould according to the invention in respectively the releasing position and the locking position;
Figures 2A and 2B show a cross-section of the embodiment of figures 1A and 1B in respectively the releasing position and the locking position;
Figures 3A and 3B show the co-action between pin and forming sleeve of the embodiment of figures 1A and 1B in respectively the releasing position and the locking position;
Figures 4A and 4B show the base plate of the embodiment of figures 1A and 1B in respectively the releasing position and the locking position;
Figures 5A and 5B show the placing of the further grinding element of the embodiment of figures 1A and 1B in respectively the releasing position and the locking position;
Figures 6A and 6B show partially cut-away views of the pneumatic cylinders in the embodiment of figures 1A and 1B in respectively the releasing position and the locking position; and
Figure 7A and 7B show cross-sections of the pneumatic cylinders of figures 6A and 6B in respectively the releasing position and the locking position.

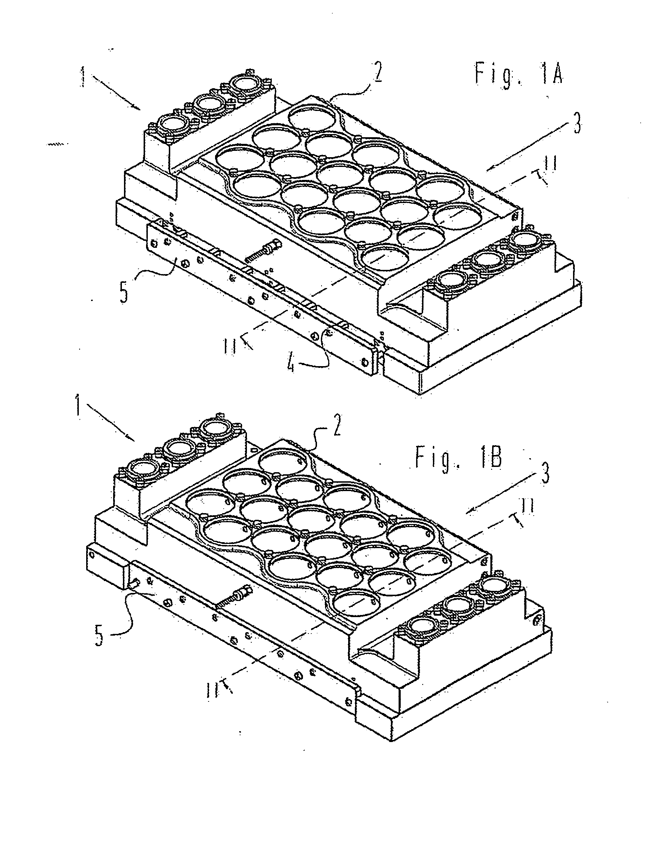

Figures 1A and 1B show a mould 1 according to the invention. Mould 1 is formed using the assembly for forming a thermoforming mould according to the invention.

Mould 1 comprises a plurality of forming sleeves 2 which are placed in cavities of mould body 3. In figure 1B forming sleeves 2 are locked in mould body 3 by pins 4 extending in mould body 3 in a plane perpendicularly of the placing direction of forming sleeves 2. Pins 4 are coupled at an end to a plate part 5. Movement of plate part 5 hereby provides for a corresponding movement of pins 4.

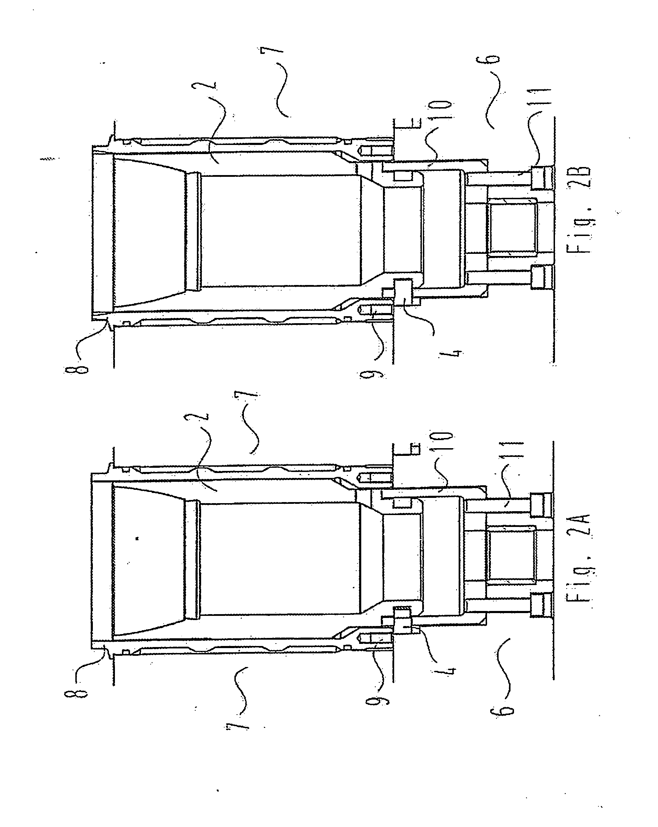

Figures 2A and 2B show cross-sections along lines II in figures 1A and 1B. Mould body 3 comprises a base plate 6 and an upper plate 7. Both plates 6, 7 comprise cavities in which forming sleeves 2 can be placed. Plates 6, 7 further form a guide channel for pin 4. A cutting nipple 8 is also received in the cavities for cutting the plastic foil. Cutting nipple 8 is secured in base plate 6 by bolts 9 and is generally made of a harder material than forming sleeve 2. A further grinding element 10 is received in base plate 6 and fixed thereto by means of bolts 11. Further grinding element 10 is secured by pin 4 in both the locking position and the releasing position. By grinding the further grinding element 10 forming sleeve 2 and cutting nipple 8 can be adapted to each other in the height in order to compensate for wear. For the sake of clarity the forming base and knock-out pin are not shown in these figures.

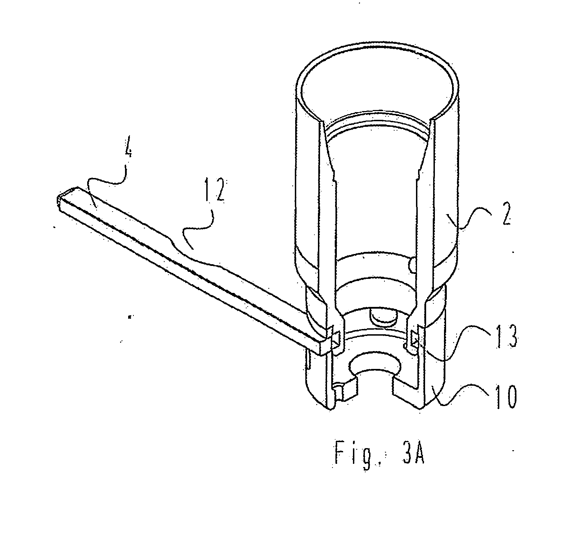

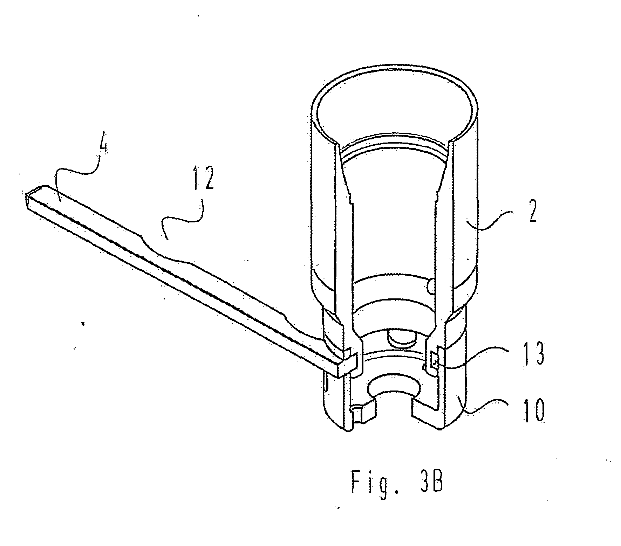

In figure 2A can be seen how pin 4 locks only further grinding element 10, while in figure 2B pin 4 also engages the recess in forming sleeve 4 and so locks forming sleeve 4 in base plate 6. Figures 3A and 3B show a partially cut-away view of the coupling between pin 4, forming sleeve 2 and further grinding element 10. Shown in figure 3A is a recess 12 in pin 4, which at the position of forming sleeve 2 in figure 3A follows the outer periphery of forming sleeve 2, whereby pin 4 does not engage groove or slot 13 of forming sleeve 2. Forming sleeve 2 is hereby removable. Figure 3B shows the locking position. In this position pin 4 extends from the walls of the cavity into groove or slot 13 of forming sleeve 2.

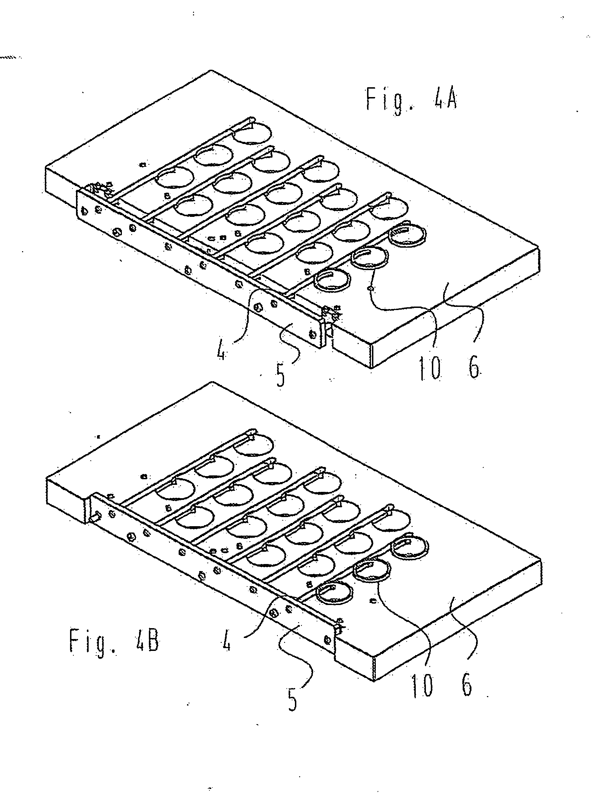

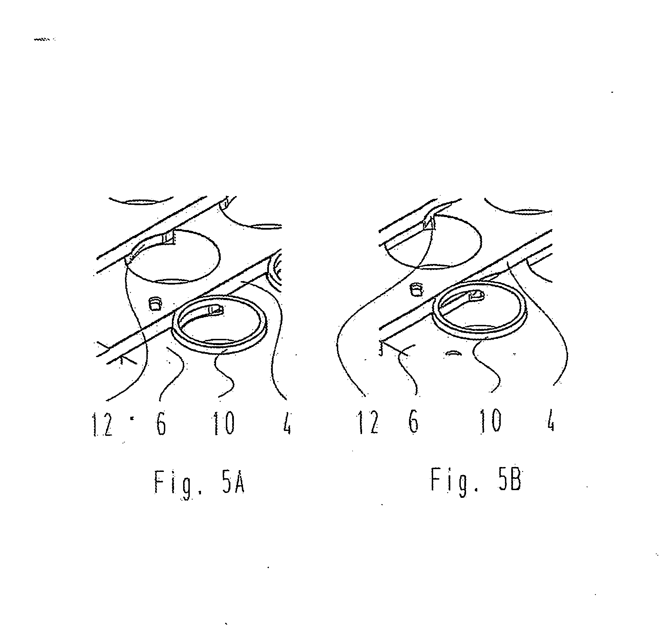

The position of pin 4 and further grinding element 10 is further shown in figures 4A and 4B and figures 5A and 5B for respectively the releasing position and the locking position. Forming sleeves 2 are not shown here. It follows from figure 4B that a single pin 4 can lock a plurality of forming sleeves 2 and that only a small sliding of pin 4 is necessary to lock all forming sleeves 2 simultaneously. Figure 5B clearly shows how in the locking position pin 4 protrudes into the cavity, whereby it can engage forming sleeve 2 (not shown).

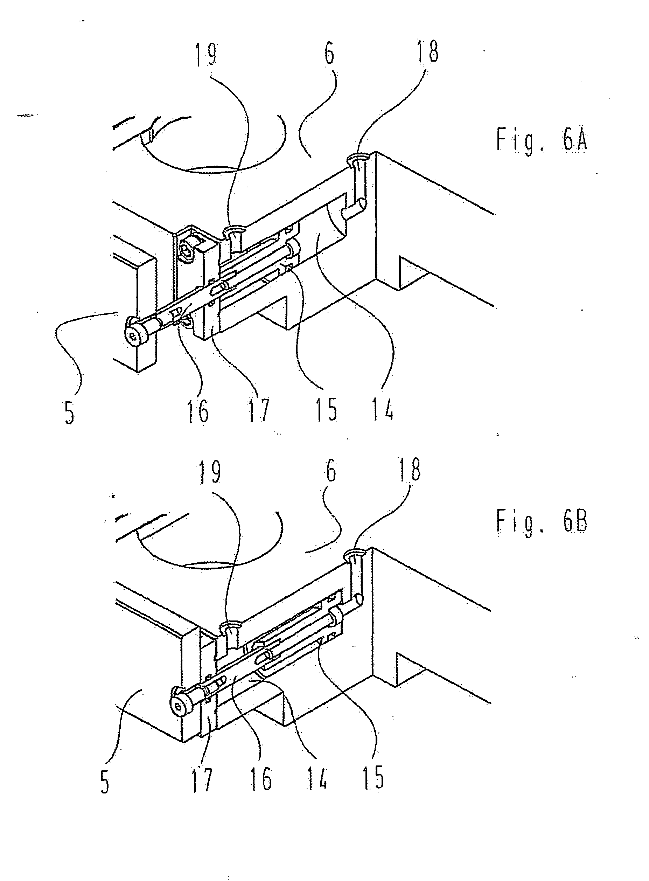

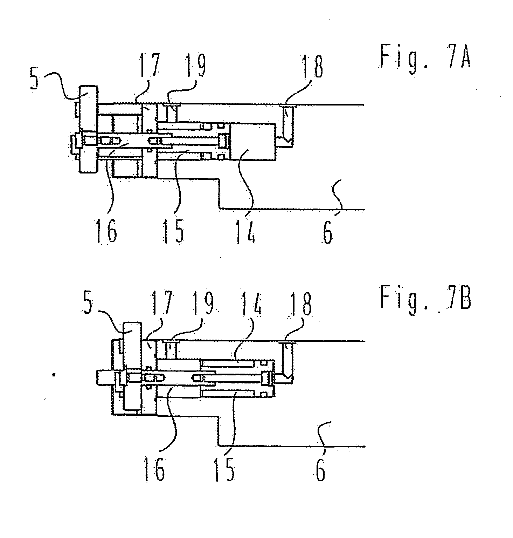

Figures 6A and 6B and 7A and 7B show an actuator for moving plate part 5. The actuator comprises a chamber 14 in which a piston 15 is movably received. Piston 15 is connected by means of a piston rod 16 to plate part 5. A seal 17 seals chamber 14. Openings 18, 19 are adapted to carry gas or air into or out of chamber 14. If this medium is introduced under pressure into chamber 14 only via opening 18, piston 15 will move to the left. Pins 4 will hereby be moved into the releasing position. If the medium is however guided under pressure into chamber 14 only via opening 19, piston 15 will move to the right, whereby pins 4 are moved into the locking position.

The movement of plate part 5 relative to base plate 6 can be further supported by guides (not shown) which are formed by rods which can slide parallel to pins 4 in close-fitting cavities in base plate 5. A good alignment of pins 4 is hereby obtained relative to the guide channels.

Openings 18, 19 are connected to conduits for transport of gas or air. The associated system of, among other parts, valves, compressors and control panel can be placed at a distance from the mould. The pneumatic cylinder can preferably be operated from outside the thermoforming device, i.e. outside a possible guarding.

With an assembly for forming a thermoforming mould according to the invention the forming sleeves can be exchanged quickly, easily and without the use, or with minimal use, of auxiliary tools.

Exchanging without auxiliary tools considerably reduces the chance of errors. No auxiliary tools which may result in production downtime can be forgotten, and the chance of damage to critical forming sleeves is reduced.

All pins can make a small stroke simultaneously in pneumatic, hydraulic or mechanical manner, thereby creating space for assembly or disassembly of the forming sleeves.

The invention is discussed in the foregoing on the basis of embodiments. It will be apparent to the skilled person that various modifications to the described embodiments are possible without departing from the scope of protection of the present invention as defined by the appended claims.

## Claims

1. Assembly for forming a thermoforming mould (1), comprising:
a forming sleeve (2) provided with an engaging element;
a mould body (3) with a cavity in which the forming sleeve (2) can be placed;
**characterized in that**
the mould body (3) further comprises a guide channel which passes at least partially through the cavity;
the assembly further comprising a pin (4) which is movable in the guide channel and which is movable between a locking position, in which the pin (4) co-acts with the engaging element in order to lock the forming sleeve (2) in the cavity, and a release position in which the forming sleeve (2) is released by the pin (4) and can be taken out of the cavity;
wherein the pin (4) comprises a locking part which is shaped such that in the locking position of the pin (4) the locking part engages the engaging element for said locking of the forming sleeve (2) in the locking position;
wherein the pin (4) further comprises a release part which is fixedly connected to the locking part and which is shaped such that in the releasing position of the pin (4) the release part (12) lies substantially at the same position as the locking part in the locking position, but wherein the release part does not engage the engaging element, or hardly so, for said release of the forming sleeve (2) in the releasing position;
wherein the mould body (3) comprises a plurality of the above stated cavities and forming sleeves (2), wherein the guide channel passes at least partially through each cavity, and wherein the pin (4) comprises a plurality of said locking and release parts for simultaneously locking the plurality of forming sleeves (2) in the locking position and for simultaneously releasing the plurality of forming sleeves (2) in the releasing position.

2. Assembly as claimed in claim 1, wherein the cavity of the mould body (3) is adapted to receive the forming sleeve (2) in a first direction, and wherein the guide channel extends substantially perpendicularly of the first direction, wherein the guide channel passes through the cavity over a predetermined length which is smaller than or substantially equal to a length of the locking part and release part of the pin (4) in the direction of movement of the pin (4).

3. Assembly as claimed in any of the foregoing claims, wherein the pin (4) is received slidably in the guide channel.

4. Assembly as claimed in claim 1, wherein the assembly comprises a plurality of guide channels and pins (4), each pin (4) associated with another plurality of cavities and forming sleeves (2), the assembly further comprising a coupling for coupling the individual pins (4) for the purpose of the simultaneous locking and release of the pluralities of forming sleeves (2);
wherein the coupling between the individual pins (4) preferably comprises a plate part (5) connected to an end of each of the individual pins (4).

5. Assembly as claimed in any of the foregoing claims, comprising a remotely controllable actuator for driving the pin (4) for movement between the locking position and the releasing position.

6. Assembly as claimed in claims 4 and 5, wherein the actuator is adapted to generate a mutual force between the mould body (3) and the coupling.

7. Assembly as claimed in claim 6, wherein the actuator is at least partially received in the mould body (3).

8. Assembly as claimed in claim 7, wherein the mould body (3) comprises a chamber (14) in which is received a movable piston (15) which is connected to the coupling by means of a piston rod (16), and a seal (17) for sealing the chamber (14), wherein the chamber (14) is provided with at least one opening (18, 19) for building up a pressure difference over the piston (15) by means of feeding or discharging a medium for the purpose of moving the piston (15), the piston rod (16), the coupling and the pins (4).

9. Assembly as claimed in claim 8, wherein the medium is air or gas, and wherein the chamber (14), the piston (15), the piston rod (16), the at least one opening (18, 19) and the seal (17) form a pneumatic cylinder, or wherein the medium is a liquid such as oil and wherein the chamber (14), the piston (15), the piston rod (16), the at least one opening (18, 19) and the seal (17) form a hydraulic cylinder.

10. Assembly as claimed in any of the foregoing claims, wherein the engaging element comprises a recess, wherein the recess of the engaging element preferably comprises a groove or slot (13) along at least part of the periphery of the forming sleeve (2).

11. Assembly as claimed in claim 10, wherein the locking part of the pin (4) extends, at least in the locking position, from a wall of the cavity into the recess of the engaging element, and wherein the release part of the pin (4) comprises a recess (12), whereby at least in the releasing position the recess (12) of the pin (4) follows an outer periphery of forming sleeve (2) and wherein the release part of the pin (4) preferably lies substantially in register with the wall of the cavity, at least in the releasing position.

12. Thermoforming device, comprising an assembly in accordance with any of the foregoing claims.

13. Thermoforming device as claimed in claim 12, to the extent dependent on claim 5, further comprising a control for remote control of the actuator for the purpose of locking or releasing the forming sleeves (2).

14. Use of a thermoforming device as defined in claim 12 or 13 for thermoforming products.

15. Method for thermoforming products from a plastic layer, comprising the steps of:
providing a thermoforming device as defined in claim 12 or 13;
bringing or holding the thermoforming device in the releasing position;
placing forming sleeves (2) corresponding to the products for thermoforming;
moving the thermoforming device to the locking position;
thermoforming the products from the plastic layer.

## Patentansprüche

1. Baugruppe zum Bildern eines Warmformwerkzeug, umfassend:
eine Formhülse (2), welches mit einem Eingriffselement versehen ist;
einen Formkörper (3) mit einer Höhlung, in dem die Formhülse (2) platziert werden kann;
**dadurch gekennzeichnet, dass**
der Formkörper (3) weiterhin einen Führungskanal aufweist, der zumindest teilweise durch den Hohlraum führt;
die Baugruppe weiterhin einen Stift (4) umfasst, der bewegbar in dem Führungskanal ist und welcher zwischen einer Verriegelungsposition, in welcher der Stift (4) mit dem Eingriffselement zusammenwirkt, um die Formhülse (2) in der Höhlung zu verriegeln, und einer Freigabestellung, in der die Formhülse (2) durch den Stift (4) freigegeben ist und aus der Höhlung entnommen werden kann, beweglich ist;
wobei der Stift (4) einen Verriegelungsteil umfasst, der so geformt ist, dass in der Sperrstellung des Stifts (4) das Verriegelungsteil in das Eingriffselement eingreift für die Verriegelung der Formhülse (2) in der Verriegelungsstellung;
wobei der Stift (4) ferner ein Löse-Teil umfasst, das fest mit dem Sperrteil verbunden ist und welches so geformt ist, daß in der Freigabestellung des Stifts (4) das Löse-Teil (12) im Wesentlichen an der gleichen Position wie das Sperrteil in der Sperrstellung liegt, wobei jedoch das Löse-Teil nicht, oder nur kaum, in das Eingriffselement eingreift, für die Freigabe der Formhülse (2) in der Freigabestellung;
wobei der Formkörper (3) eine Vielzahl der oben genannten Höhlungen und bildenden Hülsen (2) umfasst, wobei der Führungskanal wenigstens teilweise durch jede Höhlung verläuft, und wobei der Stift (4) eine Mehrzahl dieser Verriegelungsteilen und Löse-Teile zum gleichzeitigen Verriegeln der Mehrzahl von bildenden Hülsen (2) in der Verriegelungsposition und zum gleichzeitigen Freigeben der Mehrzahl von bildenden Hülsen (2) in der Freigabeposition.

2. Baugruppe nach Anspruch 1, wobei die Höhlung des Formkörpers (3) angepasst ist, die Formhülse (2) in einer ersten Richtung zu empfangen, und wobei der Führungskanal im Wesentlichen sich senkrecht zu der ersten Richtung erstreckt, wobei der Führungskanal durch die Höhlung über eine vorbestimmte Länge verläuft, die kleiner als oder im Wesentlichen gleich einer Länge des Verriegelungsteils und Löse-Teil des Stifts (4) in Richtung der Bewegung des Stiftes (4) ist.

3. Baugruppe nach einem der vorhergehenden Ansprüche, wobei der Stift (4) verschiebbar in dem Führungskanal aufgenommen ist.

4. Baugruppe nach Anspruch 1, wobei die Baugruppe eine Vielzahl von Führungskanälen und Stifte (4) umfasst, von denen jeder Stift (4) einer anderen Mehrzahl von Höhlungen und Formhülsen zugeordnet ist, wobei die Baugruppe ferner eine Kupplung zum Koppeln der einzelnen Stifte (4) zum Zweck der simultanen Ver-und Entriegelung der Vielzahl von formenden Hülsen (4);
wobei die Kopplung zwischen den einzelnen Stiften (4) umfasst vorzugsweise einen Plattenteil (5) verbunden mit einem Ende von jedem der einzelnen Stifte (4).

5. Baugruppe nach einem der vorhergehenden Ansprüche, umfassend einen fernsteuerbaren Antrieb zum Antreiben des Stifts(4) für eine Bewegung zwischen der Verriegelungs- und der Freigabeposition.

6. Baugruppe nach Ansprüche 4 und 5, wobei der Aktuator angepasst ist, um eine gegenseitige Kraft zwischen dem Formkörper (3) und der Kupplung zu erzeugen.

7. Baugruppe nach Anspruch 6, wobei der Aktuator zumindest teilweise im Formkörper (3) aufgenommen ist.

8. Baugruppe nach Anspruch 7, wobei der Formkörper (3) eine Kammer (14), in der ein beweglicher Kolben (15), der mit der Kupplung mittels einer Kolbenstange verbunden ist, und eine Dichtung (17) zum Abdichten der Kammer (14) aufgenommen sind, wobei die Kammer (14) versehen ist mit mindestens einer Öffnung (18, 19) für den Aufbau einer Druckdifferenz über dem Kolben (15) mittels Zuführen oder Abführen eines Mediums zum Zwecke der Bewegung des Kolbens (15), der Kolbenstange (16), der Kupplung und der Stifte (4).

9. Baugruppe nach Anspruch 8, worin das Medium Luft oder Gas ist, und wobei die Kammer (14), der Kolben (15), die Kolbenstange (16), die zumindest eine Öffnung (18, 19) und die Dichtung (17) bilden einen Pneumatikzylinder, oder wobei das Medium eine Flüssigkeit wie Öl ist und wobei die Kammer (14), der Kolben (15), die Kolbenstange (16), die zumindest eine Öffnung (18, 19) und die Dichtung (17) bilden einen Hydraulikzylinder.

10. Baugruppe nach einem der vorhergehenden Ansprüche, wobei das Eingriffselement eine Aussparung umfasst, wobei die Aussparung des Eingriffselements umfasst vorzugsweise eine Nut oder einen Schlitz (13) entlang mindestens eines Teils des Umfangs der formenden Hülse (2).

11. Baugruppe nach Anspruch 10, wobei der verriegelnde Teil des Stifts (4) erstreckt sich, zumindest in der Verriegelungsposition von einer Wand der Höhlung in die Ausnehmung des Eingriffselements, und wobei das Löse-Teil des Stifts eine Ausnehmung (12) aufweist, wobei zumindest in der Freigabestellung die Ausnehmung (12) des Stifts (4) einer äußeren Begrenzungsfläche der formenden Hülse (2) folgt, wobei das Löse-Teil des Stiftes (4) vorzugsweise im Wesentlichen in Ausrichtung mit der Wandlung der Höhlung liegt, zumindest in der Freigabeposition.

12. Warmumformvorrichtung, umfassend eine Baugruppe nach einem der vorhergehenden Ansprüche.

13. Warmumformvorrichtung nach Anspruch 12, soweit abhängig von Anspruch 5, ferner umfassend eine Steuereinheit zur Fernsteuerung des Aktuators zum Zwecke der Verriegelung oder Freigabe der formenden Hülsen (2).

14. Verwendung einer Warmumformvorrichtung nach Anspruch 12 oder 13 zum Thermoformen von Produkte.

15. Verfahren zum Thermoformen von Produkten aus einer Kunststofflage, umfassend die folgenden Schritte:
Bereitstellen einer Warmumformvorrichtung nach Anspruch 12 oder 13;
Bringen oder Halten der Warmumformvorrichtung in die Freigabestellung;
Anordnen von formenden Hülsen (2), die zu den Produkten zum Thermoformen korrespondieren;
Bewegen der Warmumformvorrichtung in die Verriegelungsstellung;
Thermoformen der Produkte aus der Kunststofflage.

## Revendications

1. Ensemble pour former un moule de thermoformage (1) comprenant :
un manchon de formage (2) prévu avec un élément de mise en prise ;
un corps de moule (3) avec une cavité dans laquelle le manchon de formage (2) peut être placé ;
**caractérisé en ce que**
le corps de moule (3) comprend en outre un canal de guidage qui passe au moins partiellement par la cavité ;
l'ensemble comprenant en outre une broche (4) qui est mobile dans le canal de guidage et qui est mobile entre une position de blocage dans laquelle la broche (4) co-agit avec l'élément de mise en prise afin de bloquer le manchon de formage (2) dans la cavité, et une position de libération dans laquelle le manchon de formage (2) est libéré par la broche (4) et peut être retiré de la cavité ;
dans lequel la broche (4) comprend une partie de blocage qui est formée de sorte que dans la position de blocage de la broche (4), la partie de blocage met en prise l'élément de mise en prise pour ledit blocage du manchon de formage (2) dans la position de blocage ;
dans lequel la broche (4) comprend en outre une partie de libération qui est raccordée de manière fixe à la partie de blocage et qui est formée de sorte que dans la position de libération de la broche (4), la partie de libération (12) est sensiblement dans la même position que la partie de blocage dans la position de blocage, mais dans lequel la partie de libération ne met pas en prise l'élément de mise en prise ou à peine, pour ladite libération du manchon de formage (2) dans la position de libération ;
dans lequel le corps de moule (3) comprend une pluralité de cavités et de manchons de formage (2) mentionnés ci-dessus, dans lequel le canal de guidage passe au moins partiellement par chaque cavité, et dans lequel la broche (4) comprend une pluralité desdites parties de blocage et de libération pour bloquer simultanément la pluralité de manchons de formage (2) dans la position de blocage et pour libérer simultanément la pluralité de manchons de formage (2) dans la position de libération.

2. Ensemble selon la revendication 1, dans lequel la cavité du corps de moule (3) est adaptée pour recevoir le manchon de formage (2) dans une première direction, et dans lequel le canal de guidage s'étend de manière sensiblement perpendiculaire à la première direction, dans lequel le canal de guidage passe à travers la cavité sur une longueur prédéterminée qui est inférieure ou sensiblement égale à une longueur de la partie de blocage et de la partie de libération de la broche (4) dans la direction de déplacement de la broche (4).

3. Ensemble selon l'une quelconque des revendications précédentes, dans lequel la broche (4) est reçue de manière coulissante dans le canal de guidage.

4. Ensemble selon la revendication 1, dans lequel l'ensemble comprend une pluralité de canaux de guidage et de broches (4), chaque broche (4) étant associée à une autre pluralité de cavités et de manchons de formage (2), l'ensemble comprenant en outre un couplage pour coupler les broches (4) individuelles afin de bloquer et de libérer simultanément la pluralité de manchons de formage (2) ;
dans lequel le couplage entre les broches (4) individuelles comprend de préférence une partie de plaque (5) raccordée à une extrémité de chacune des broches (4) individuelles.

5. Ensemble selon l'une quelconque des revendications précédentes, comprenant un actionneur contrôlable à distance pour entraîner la broche (4) pour le déplacement entre la position de blocage et la position de libération.

6. Ensemble selon les revendications 4 et 5, dans lequel l'actionneur est adapté pour générer une force mutuelle entre le corps de moule (3) et le couplage.

7. Ensemble selon la revendication 6, dans lequel l'actionneur est au moins partiellement reçu dans le corps de moule (3).

8. Ensemble selon la revendication 7, dans lequel le corps de moule (3) comprend une chambre (14) dans laquelle est reçu un piston mobile (15) qui est raccordé au couplage au moyen d'une tige de piston (16), et un joint d'étanchéité (17) pour sceller la chambre (14), dans lequel la chambre (14) est prévue avec au moins une ouverture (18, 19) pour accumuler une différence de pression sur le piston (15) au moyen de l'alimentation ou de la décharge d'un milieu afin de déplacer le piston (15), la tige de piston (16), le couplage et les broches (4).

9. Ensemble selon la revendication 8, dans lequel le milieu est de l'air ou du gaz, et dans lequel la chambre (14), le piston (15), la tige de piston (16), la au moins une ouverture (18, 19) et le joint d'étanchéité (17) forment un cylindre pneumatique, ou dans lequel le milieu est un liquide tel que de l'huile et dans lequel la chambre (14), le piston (15), la tige de piston (16), la au moins une ouverture (18, 19) et le joint d'étanchéité (17) forment un cylindre hydraulique.

10. Ensemble selon l'une quelconque des revendications précédentes, dans lequel l'élément de mise en prise comprend un évidement, dans lequel l'évidement de l'élément de mise en prise comprend en outre une rainure ou fente (13) le long d'au moins une partie de la périphérie du manchon de formage (2).

11. Ensemble selon la revendication 10, dans lequel la partie de blocage de la broche (4) s'étend, au moins dans la position de blocage, à partir d'une paroi de la cavité dans l'évidement de l'élément de mise en prise, et dans lequel la partie de libération de la broche (4) comprend un évidement (12), moyennant quoi au moins dans la position de libération, l'évidement (12) de la broche (4) suit une périphérie externe du manchon de formage (2) et dans lequel la partie de libération de la broche (4) est de préférence sensiblement alignée avec la paroi de la cavité, au moins dans la position de libération.

12. Dispositif de thermoformage comprenant un ensemble selon l'une quelconque des revendications précédentes.

13. Dispositif de thermoformage selon la revendication 12, dans la mesure où elle dépend de la revendication 5, comprenant en outre une commande pour la commande à distance de l'actionneur afin de bloquer ou de libérer les manchons de formage (2).

14. Utilisation d'un dispositif de thermoformage selon la revendication 12 ou 13 pour thermoformer des produits.

15. Procédé pour thermoformer des produits avec une couche de plastique, comprenant les étapes consistant à :
prévoir un dispositif de thermoformage selon la revendication 12 ou 13 ;
amener ou maintenir le dispositif de thermoformage dans la position de libération ;
placer les manchons de formage (2) correspondant aux produits pour le thermoformage ;
déplacer le dispositif de thermoformage dans la position de blocage ;
thermoformer les produits à partir de la couche de plastique.
